# EUROPEAN PATENT APPLICATION

(11) **EP 4 296 250 A1**
(43) Date of publication of application: **27.12.2023**
(21) Application number: 22180752.2
(22) Date of filing: 23.06.2022
(51) Int. Cl.: C05B 11/06, G01D 11/00, G01D 11/30, G01D 21/02

(54) **PROCESS OR STORAGE TANK WITH DUAL MEASUREMENT MEANS AND METHOD OF OPERATING THEREOF**

(71) Applicant: Yara International ASA, 0277 Oslo (NO)
(72) Inventor: Allen, Carole, 0286 Oslo (NO); Bujalski, Jakub, 3914 Porsgrunn (NO); Geppert, Tim, 3739 Skien (NO)
(74) Representative: De Clercq & Partners

(57) **Abstract**

The present disclosure relates to a process or storage tank comprising a liquid, slurry, gas or mixture thereof; a conduit in fluid communication with the tank or a conduit inside the tank; and a first means (9) for measuring a first process or storage condition selected from the group consisting of temperature, pressure, vibration, viscosity, water content, solid content, solid size, solid shape, solid roughness, and liquid level, wherein the conduit or the means for measuring is configured for removably integrating a second means (4) for measuring a second process or storage condition selected from the same group as above, while process or storage is proceeding inside the tank and while the first means for measuring is inside the process or storage tank. The present disclosure further relates to a respective method and to a method for revamping a process or storage tank accordingly.

## Description

### Field

The present disclosure relates to the field of a process or a storage tank with a dual measurement means.

### Background

Measuring is a critical aspect in ensuring proper control of a production process or the safety, that is the absence of decomposition, in a storage, buffer or holding tank. A wide variety of measurement means, in particular sensors based upon a wide variety of technologies exist for determining conditions such as temperature, pressure and vibration. Without indications from such measurement means, neither a production process nor safe storage can be controlled.

The nitrophosphate process, enabling the production of NPK fertilizers is an example of a multi-step process, requiring the control of the process conditions at each step. In particular, the temperature and the pressure are to be controlled.

The nitro-phosphate process comprises six main steps. In a first step (digestion step), phosphate rock is digested in nitric acid yielding a digestion liquor at a temperature of 65°C. In a second step (crystallisation step), calcium nitrate tetrahydrate is crystallised out of the digestion liquor yielding a crystal slurry. In a third step (separation step), the crystallised calcium nitrate is separated by a technique such as filtration or centrifugation, resulting in calcium nitrate tetrahydrate crystals being separated from the liquid of the crystal slurry, referred to as the mother liquor. In a fourth step (neutralisation step), the mother liquor is neutralized using ammonia up to a pH of approximately 5.8. In a fifth step (particulation), the neutralized mother liquor is particulated into the final product (e.g. for use as an NP-fertilizer). Potassium salts can be added during the neutralization process or to the neutralized mother liquor. When the particulation is performed by prilling, an evaporation step is performed upfront the addition of potassium salts, in order to reach a water content sufficiently low to perform prilling. In a sixth step (coating step), the particles can be subsequently coated, for example with a coating agent suitable for reducing moisture absorption and for, thereby, ensuring proper physical properties for the particles.

Therefore, in the NPK process, also measuring the pH at the neutralisation step and the composition of the slurry, through vibration measurement, during the crystallisation step, in order to ensure proper crystal growth, is necessary.

### Prior art

DE102018112913A1 relates to a sensor for detecting the flow noise and / or the temperature in a pipeline. According to the invention it is proposed that the sensor is provided with a contact surface, which bears in the position of use from the outside to the pipeline, and that the sensor is held with a pipe surrounding clamp or a flexible band firmly in the position of use on the pipeline.

CN215639594U discloses a high accuracy triaxial temperature vibration composite sensor relates to signal detection technical field. On the premise of simultaneously detecting the vibration signal and the temperature signal of the object to be detected, the vibration detection device has the advantages of simple and compact structure and easiness in assembly and debugging, and the vibration detection direction of the sensor is adjustable. The temperature vibration composite sensor comprises a lower base; an annular mounting cavity is formed in the lower base, and a mounting base is arranged in the annular mounting cavity; the mounting base can rotate in the annular mounting cavity; the sleeve is sleeved on the outer side of the mounting base, the locking nut is sleeved on the outer side of the sleeve, the lower end of the locking nut is in threaded connection with the upper end of the lower base, and the mounting base is tightly pressed in the annular mounting cavity; the temperature sensor probe is connected to the bottom of the mounting base, the signal processing chip is arranged at the upper end of the mounting base, and the mems acceleration chip is arranged on the signal processing chip. The application is used for improving the performance of the temperature vibration composite sensor.

CN215573123U discloses a temperature vibration composite sensor based on mems acceleration chip relates to signal detection technical field. The vibration signal and the temperature signal of the object to be detected can be detected simultaneously, and the device has the advantages of simple and compact structure and easiness in assembly and debugging. The temperature vibration composite sensor comprises a sensor shell, a temperature sensor probe, a mems acceleration chip and a signal processing chip; a sensor mounting cavity which is communicated from left to right is arranged in the sensor shell, a sensor mounting base is arranged in the mounting cavity, the sensor mounting base is connected to the opening at the left end of the sensor shell, and a sensor cover plate is arranged at the opening at the right end of the sensor shell; the temperature sensor probe is connected to the left end of the sensor mounting base, the signal processing chip is arranged at the right end of the sensor mounting base, and the mems acceleration chip is arranged on the signal processing chip; the bottom of the mounting cavity is provided with a wire outlet, and the wire outlet is connected with a wire outlet connector. The application is used for improving the performance of the temperature vibration composite sensor.

CN112729399A discloses a liquid-gas pressure and liquid-gas vibration sensor and a preparation method thereof. The pressure detection module comprises a hydraulic pressure chamber, a spring tube and a first fiber bragg grating sensor, the first fiber bragg grating sensor is arranged on the spring tube, the spring tube is arranged on the outer side of the hydraulic pressure chamber and communicated with the hydraulic pressure chamber, and a through hole is formed in the hydraulic pressure chamber. The vibration detection module comprises an outer protective shell, a vibration part and a second fiber grating sensor, the second fiber grating sensor is arranged on the vibration part, the vibration part is arranged in the outer protective shell, and the vibration detection module is fixedly connected with the pressure detection module. The water pressure near the shore can be monitored, the impact vibration effect of seawater on the wave wall and the impact dam can also be monitored, and the purpose of multiple purposes of one sensor is achieved. The printing ink is manufactured by a 3D fused deposition printing preparation method, is of an integrated structure, and shortens the processing period.

The prior art however does not address the possibility to incorporate a second measurement means while a chemical process or storage of a chemical substance is ongoing in a tank. The flexibility to proceed to such incorporation without disturbing the process or storage, that is without having to empty the tank, thereby stopping the process or interrupting the storage is very important: depending upon how the process or storage is proceeding, one would like to modify which second process or storage condition is measured, without having to replace a defined dual measurement means for another defined dual measurement means.

The present disclosure, therefore, aims at providing a solution for reaching the above described flexibility.

### Summary

In one aspect of the disclosure, a process or storage tank is disclosed. The process or storage tank comprises:
- a liquid, slurry, gas or mixture thereof;
- a conduit in fluid communication with the tank or a conduit inside the tank; and
- a first means for measuring a first process or storage condition selected from the group consisting of temperature, pressure, vibration, pH, viscosity, water content, solid content, solid size, solid shape, solid roughness, and liquid level;

The system is characterised in that the conduit or the means for measuring, also referred to herein as a measurement means, is configured for removably integrating a second means for measuring a second process or storage condition selected from the group consisting of temperature, pressure, vibration, pH, viscosity, water content, solid content, solid size, solid shape, solid roughness, and liquid level, while process or storage is proceeding inside the process or storage tank, and while the first means for measuring is inside the process or storage tank.

The inventors have realised that it is not necessary to have a means for measuring two process or storage conditions. All that is required is the suitability for the conduit or the means for measuring to measure two conditions. The (first) means for measuring therefore is designed such that at least a second means for measuring a process or storage condition can be integrated to a conduit or to a (first) means for measuring another process condition, while a process or the storage of a substance is occurring in a tank in which the conditions are to be measured.

The system of the disclosure therefore does not require the process or storage to be disturbed for an additional means for measuring to be integrated. What this means is that the process or storage tank needs not be emptied for the insertion of the second measurement means or for the insertion of a new core supporting a second measurement means.

Further, the second means for measuring can be conveniently selected by the operator, based upon the specific process or storage. The operator can also switch between two different second means of measuring without disturbing the process or the storage. Hence, the operator can acquire all the information related to the first process or storage condition, and the information for two different second process storage conditions for a defined period time. Said otherwise, the system of the disclosure presents the flexibility required, such that the relevant information is measured, at the same time as the production load or safety of the storage is optimised.

In one embodiment according to the tank of the disclosure, the first means for measuring comprises a support or core, such as a metal sheath, and the second means for measuring is removably integrable or attachable to the support or core.

In one embodiment according to the tank of the disclosure, the liquor is a nitrophosphate digestion liquor, a nitrophosphate crystal slurry, a nitrophosphate mother liquor, or a finished fertiliser liquor for evaporation or particulation.

In one embodiment according to the tank of the disclosure, the first process or storage condition is temperature, and the second process or storage condition is pressure or liquid level.

In one embodiment according to the tank of the disclosure, the first means for measuring is a thermocouple or a resistive temperature probe, and the second means for measuring is a piezoresistive or a pitot tube pressure probe.

In one embodiment according to the tank of the disclosure, the tank further comprises:
- a collection box for collecting the data of the first or the second means for measuring; and
- a processing means for processing the data collected by the collection box.

In one embodiment according to the tank of the disclosure, the first process or storage condition is temperature, the second process or storage condition is vibration, and the system further comprises:
- a data collection box for collecting vibration data; and
- a processing means for processing the vibration data such that the composition of the liquid, slurry, gas or mixture thereof, inside the process storage tank, is determined.

In one aspect of the disclosure, a method for measuring two process or storage conditions in a process or storage tank is disclosed. The method comprises the steps of:
a) measuring a first process or storage condition with a first means for measuring in process or storage tank comprising:
   - a liquid, slurry, gas or mixture thereof;
   - a conduit in fluid communication with the tank or a conduit inside the tank; and
   - the first means for measuring the first process or storage condition selected from the group consisting of temperature, pressure, pH, vibration, viscosity, water content, solid content, solid size, solid shape, solid roughness, and liquid level;

The method is characterised in that it further comprises the steps of:
b) removably integrating, to the conduit or to the first means for measuring the second means, a second means for measuring a second process or storage condition selected from the group consisting of temperature, pressure, vibration, pH, viscosity, water content, solid content, solid size, solid shape, solid roughness, and liquid level; and
c) measuring the second process or storage condition with the second means for measuring.

In one embodiment according to the method of the disclosure, the first means for measuring comprises a support or core, such as a metal sheath, and step b) is performed by removably integrating or attaching the second means for measuring to the support or core.

In one embodiment according to the method of the disclosure, the liquor is a nitrophosphate digestion liquor, a nitrophosphate crystal slurry, a nitrophosphate mother liquor, or a finished fertiliser liquor to be submitted to evaporation or particulation.

In one embodiment according to the method of the disclosure, the method further comprises the steps of:
d) collecting data measured in step a) or step c) in a collection box; and
e) processing the data collected in step d) in a processing means, thereby determining a third process or storage condition.

In one embodiment according to the method of the disclosure, the first process or storage condition measured in step b) is temperature and:
- the second process or storage condition measured in step c) is pressure;
- the second process or storage condition measured in step c) is liquid level; or
- the second process or storage condition measured in step c) is vibration, and vibration data are collected in step d), and the vibration data collected in step d) are processed in step e), such that the composition of the liquid, slurry, gas or mixture thereof, inside the process storage tank, is determined.

In one aspect of the disclosure, the use of the process or storage tank of the disclosure. for performing the method of the disclosure, is disclosed.

In one aspect of the disclosure, a method for revamping a process or storage tank comprising:
- a liquid, slurry, gas or mixture thereof;
- a conduit in fluid communication with the tank or a conduit inside the tank; and
- a means for measuring a process or storage condition;
into a process or storage tank of the disclosure, is disclosed. The method comprises the steps of:
- removing the means for measuring; and
- integrating a first means for measuring a first process or storage condition selected from the group consisting of temperature, pressure, pH, vibration, viscosity, water content, solid content, solid size, solid shape, solid roughness, and liquid level, and configured for removably integrating a second means for measuring a second process or storage condition selected from the group consisting of temperature, pressure, vibration, pH, viscosity, water content, solid content, solid size, solid shape, solid roughness, and liquid level, while process or storage is proceeding inside the process or storage tank, and while the first means for measuring is inside the process or storage tank.

In one embodiment according to the method for revamping of the disclosure, the first means for measuring comprises a support or core, such as a metal sheath, the second means for measuring is removably integrable or attachable to the support or core, and the data generated by the first or the second means for measuring are processable by a processing means, for determining a third process or storage condition, such that the method further comprises the steps of:
- integrating a data box for collecting the data of the first or the second means for measuring; and
- integrating a processing means for processing the data collected by the data box, thereby determining a third process or storage condition.

### Description of the Figures

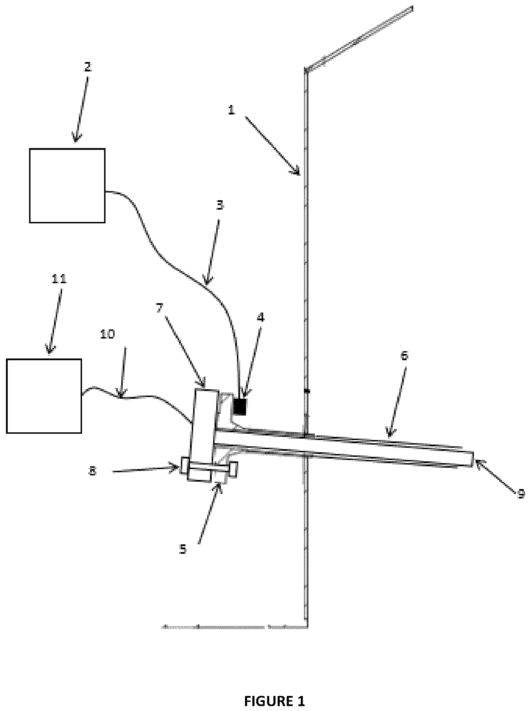

Figure 1 shows a schematic representation of an embodiment of the present disclosure.

### Description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it. As defined herein, a slurry is a semi-liquid mixture of particles.

In one aspect of the disclosure, a process or storage tank is disclosed. The process or storage tank comprises a liquid, slurry, gas or mixture thereof; a conduit in fluid communication with the tank or a conduit inside the tank; and a first means for measuring a first process or storage condition selected from the group consisting of temperature, pressure, pH, vibration, viscosity, water content, solid content, solid size, solid shape, solid roughness, and liquid level;

The system is characterised in that the conduit or the means for measuring is configured for removably integrating a second means for measuring a second process or storage condition selected from the group consisting of temperature, pressure, vibration, pH, viscosity, water content, solid content, solid size, solid shape, solid roughness, and liquid level, while process or storage is proceeding inside the process or storage tank, and while the first means for measuring is inside the process or storage tank.

The inventors have realised that it is not necessary to have a means for measuring two process or storage conditions, or stated differently that a first and second measurement means are permanently fixed to the tank or conduit. All that is required is the suitability for the conduit or the means for measuring to measure two conditions. The means for measuring therefore is designed such that it comprises a first means for measuring for measuring a process or storage condition and that a second means for measuring a process or storage condition can be integrated to the conduit or to the first means for measuring, while a process or the storage of a substance is occurring in a tank in which the conditions are to be measured, without interrupting the process or storage.

The system of the disclosure therefore does not require the process or storage to be disturbed for an additional means for measuring to be integrated. What this means is that the process or storage tank needs not be emptied for a new core to be inserted.

Further, the second means for measuring can be conveniently be selected by the operator, based upon the specific process or storage. The operator can also switch between two different second means of measuring without disturbing the process or the storage. Hence, the operator can acquire all the information related to the first process or storage condition, for instance in a continuous manner, and can in addition acquire the information for two different second process storage conditions for a defined period time by introducing and/or replacing a second means for measuring without interruption of the process or storage. Said otherwise, the system of the disclosure presents an improved flexibility, such that the relevant information is measured, at the same time as the production load or safety of the storage is optimised.

In one embodiment according to the tank of the disclosure, the first means for measuring comprises a support or core, such as a metal sheath, and the second means for measuring is removably integrable or attachable to the support or core.

It is advantageous to make use of a support or core, such as a metal sheath, outside the tank, for integrating the second means for measuring the second process or storage condition. The support or core is easily accessible and offers a safe location and an optimal surface for integrating the second means for measuring such that the second means for measuring then provides a signal with acceptable quality.

To note is that conduits at the outside of the tank, whether or not they also comprise a portion inside the tank, as for example heat exchangers, also offer a beneficial location for integrating the second means for measuring.

In one embodiment according to the tank of the disclosure, the liquor is a nitrophosphate digestion liquor, a nitrophosphate crystal slurry, a nitrophosphate mother liquor, or a finished fertiliser liquor for evaporation or particulation.

As mentioned above, the nitrophosphate process is a multi-step process requiring the measurement of several process conditions. In particular, the digestion, evaporation and particulation steps all require measurement of the temperature or the pressure. The neutralization step further requires pressure and pH measurement while the crystallisation step further requires the measurement of the fluid level and the determination of the composition of the slurry inside the crystallisation tank, which composition can be determined through the measurement of the vibrations in the slurry. The system of the disclosure is thus especially suitable for use in the nitrophosphate process.

Further, it is beneficial to obtain information during the digestion step on the solid content, in order to determine the amount of phosphate rock actually digested in acid and the amount of insoluble material.

In addition, during the neutralization step, it is especially advantageous to obtain information regarding the viscosity and the granulometry, that is the solid content, size, shape and roughness. Information on the water content is also very practical in view of planning for the evaporation and establishing how much water is to be evaporated.

In one embodiment according to the tank of the disclosure, the first process or storage condition is temperature, and the second process or storage condition is pressure or liquid level.

Several processes, such as but not limited to the neutralisation step of the nitrophosphate process, when performed at higher pressure than atmospheric pressure, require the measurement of both the temperature and the pressure of inside the neutralisation tank. Thus, it is of particular benefit to use the system of the disclosure capable of measuring two conditions, for measuring both the temperature and the pressure. In one embodiment according to the process or storage tank of the disclosure, the first process or storage condition is temperature and the second process or storage condition is liquid level or vibration.

Alternatively, it is of particular benefit to measure simultaneously the temperature and the liquid level, for example during the crystallisation of the nitrophosphate process, during which it must be ensured that the temperature is within the range for the crystallisation of calcium nitrate, and the liquid level is to be monitored as crystals form. Also in a storage tank, containing a liquid that is to be transferred, is it especially useful to know the temperature of the liquid and the volume of liquid available.

In one embodiment according to the tank of the disclosure, the first means for measuring is a thermocouple or a resistive temperature probe, and the second means for measuring is a piezoresistive or a pitot tube pressure probe.

A piezoresistive pressure probe offers the benefits of a small size, at the same time as the possibility to measure for a broad range of pressure conditions. Further, a piezoresistive probe is capable of measuring very precisely and remains stable even under changes in the process conditions, including pressure.

A pitot tube presents the benefits of easy handling as it is of a small size. A Pitot tube is also easy to use in a very broad range of existing systems and offers low pressure loss, thereby minimum disturbance of the process, as well as minimum frictional losses since it has no moving part.

A thermocouple offers the benefits of accurate measurement at a wide operating range, including very high temperatures, which means that they can be used in demanding environments. In addition, they provide fast response, due to a very low response time, and highly reproducible results. Temperature resistive probes offer the same advantages as enumerated for thermocouples and also have a long lifetime.

In one embodiment according to the tank of the disclosure, the tank further comprises:
- a collection box or acquisition box for collecting the data of the first or the second means for measuring; and
- a processing means for processing the data collected by the collection box.

In the event there is no sensor available for directly measuring the first or the second process or storage condition, an alternative is to measure a condition that can be used for determining the target condition. In this case, it is possible, upon storage of the data acquired by the first or the second means for measuring, to subsequently process those data, for example through a software running an algorithm, to compute the target process or storage condition.

In one embodiment according to the tank of the disclosure, the first process or storage condition is temperature, the second process or storage condition is vibration, and the system further comprises:
- a data collection box or acquisition box for collecting vibration data; and
- a processing means for processing the vibration data such that the composition of the liquid, slurry, gas or mixture thereof, inside the process storage tank, is determined.

As mentioned above, it is particularly useful to obtain information on the composition of the content of the tank during the crystallization and neutralization step of the nitrophosphate process. It is advantageous to determine this composition through analysing the vibration inside the tank. Through storage of the vibration data and subsequently processing the data through a software running an algorithm, it is possible to determine to quantify each component of interest inside the tank.

In one aspect of the disclosure, a method for measuring two process or storage conditions in a process or storage tank is disclosed. The method comprises the steps of a) measuring a first process or storage condition with a first means for measuring in process or storage tank comprising a liquid, slurry, gas or mixture thereof; a conduit in fluid communication with the tank or a conduit inside the tank; and the first means for measuring the first process or storage condition selected from the group consisting temperature, pressure, vibration, pH, viscosity, water content, solid content, solid size, solid shape, solid roughness, and liquid level.

The method is characterised in that it further comprises the steps of b) removably integrating, to the conduit or to the first means for measuring the second means, a second means for measuring a second process or storage condition selected from the group consisting of temperature, pressure, pH, vibration, viscosity, water content, solid content, solid size, solid shape, solid roughness, and liquid level; and c) measuring the second process or storage condition with the second means for measuring.

The inventors have realised that it is not necessary to have a means for measuring two process or storage conditions. All that is required is the suitability of the conduit or the means for measuring to measure two conditions. The means for measuring therefore is designed such that at least one means for measuring a process or storage condition can be integrated to a conduit or to a means for measuring another process condition, while a process or the storage of a substance is occurring in a tank in which the conditions are to be measured.

The method of the disclosure therefore does not require the process or storage to be disturbed for an additional means for measuring to be integrated. What this means is that the process or storage tank needs not be emptied for a new core to be inserted.

Further, the second means for measuring can be conveniently selected by the operator, based upon the specific process or storage. The operator can also switch between two different second means of measuring without disturbing the process or the storage. Hence, the operator can acquire all the information related to the first process or storage condition, and the information for two different second process storage conditions for a defined period time. Said otherwise, the method of the disclosure presents the flexibility required, such that the relevant information is measured, at the same time as the production load or safety of the storage is optimised.

In one embodiment according to the method of the disclosure, the first means for measuring comprises a support or core, such as a metal sheath, and step b) is performed by removably integrating or attaching the second means for measuring to the support or core.

It is advantageous to make use of a support or core, such as a metal sheath, outside the tank, for integrating the second means for measuring the second process or storage condition. The support or core is easily accessible and offers a safe location and an optimal surface for integrating the second means for measuring such that the second means for measuring then provides a signal with acceptable quality.

To note is that conduits at the outside of the tank, whether or not they also comprise a portion inside the tank, as for example heat exchangers, also offer a beneficial location for integrating the second means for measuring.

In one embodiment according to the method of the disclosure, the liquor is a nitrophosphate digestion liquor, a nitrophosphate crystal slurry, a nitrophosphate mother liquor, or a finished fertiliser liquor to be submitted to evaporation or particulation.

As mentioned above, the nitrophosphate process is a multi-step process requiring the measurement of several process conditions. In particular, the digestion, neutralization, evaporation and particulation steps all require measurement of both the temperature. The neutralization step further requires pressure and pH measurement while the crystallisation step further requires the measurement of the fluid level and the determination of the composition of the slurry inside the crystallisation tank, which composition can be determined through the measurement of the vibrations in the slurry. The method of the disclosure is thus especially suitable for application to the nitrophosphate process.

Further, it is beneficial to obtain information during the digestion step on the solid content, in order to determine the amount of phosphate rock actually digested in acid and the amount of insoluble material.

In addition, during the neutralization step, it is especially advantageous to obtain information regarding the viscosity and the granulometry, that is the solid content, size, shape and roughness. Information on the water content is also very practical in view of planning for the evaporation and establishing how much water is to be evaporated.

In one embodiment according to the method of the disclosure, the method further comprises the steps of d) collecting data measured in step a) or step c) in a collection box or acquisition box; and e) processing the data collected in step d) in a processing means, thereby determining a third process or storage condition.

In the event there is no sensor available for directly measuring the first or the second process or storage condition, an alternative is to measure a condition that can be used for determining the target condition. In this case, it is possible, upon storage of the data acquired by the first or the second means for measuring, to subsequently process those data, for example through a software running an algorithm, to compute the target process or storage condition.

In one embodiment according to the method of the disclosure, the first process or storage condition measured in step b) is temperature, and the second process or storage condition measured in step c) is pressure; the second process or storage condition measured in step c) is liquid level; or the second process or storage condition measured in step c) is vibration, and vibration data are collected in step d), and the vibration data collected in step d) are processed in step e), such that the composition of the liquid, slurry, gas or mixture thereof, inside the process storage tank, is determined.

Several processes, such as but not limited to the neutralisation step of the nitrophosphate process, when performed at higher pressure than atmospheric pressure, require the measurement of both the temperature and the pressure of inside the neutralisation tank. Thus, it is of particular benefit to use the system of the disclosure capable of measuring two conditions, for measuring both the temperature and the pressure. In one embodiment according to the process or storage tank of the disclosure, the first process or storage condition is temperature and the second process or storage condition is liquid level or vibration.

Alternatively, it is of particular benefit to measure simultaneously the temperature and the liquid level, for example during the crystallisation of the nitrophosphate process, during which it must be ensured that the temperature is within the range for the crystallisation of calcium nitrate, and the liquid level is to be monitored as crystals form. Also in a storage tank, containing a liquid that is to be transferred, is it especially useful to know the temperature of the liquid and the volume of liquid available.

Further, it is particularly useful to obtain information on the composition of the content of the tank during the crystallization and neutralization step of the nitrophosphate process. It is advantageous to determine this composition through analysing the vibration inside the tank. Through storage of the vibration data and subsequently processing the data through a software running an algorithm, it is possible to determine to quantify each component of interest inside the tank.

In one aspect of the disclosure, the use of the process or storage tank of the disclosure for performing the method of the disclosure is disclosed.

In one aspect of the disclosure, a method for revamping a process or storage tank comprising a liquid, slurry, gas or mixture thereof; a conduit in fluid communication with the tank or a conduit inside the tank; and a means for measuring a process or storage condition; into a process or storage tank of the disclosure, is disclosed. The method comprises the steps of removing the means for measuring; and integrating a first means for measuring a first process or storage condition selected from the group consisting of temperature, pressure, vibration, pH, viscosity, water content, solid content, solid size, solid shape, solid roughness, and liquid level, and configured for removably integrating a second means for measuring a second process or storage condition selected from the group consisting of temperature, pressure, vibration, pH, viscosity, water content, solid content, solid size, solid shape, solid roughness, and liquid level, while process or storage is proceeding inside the process or storage tank, and while the first means for measuring is inside the process or storage tank.

In one embodiment according the method for revamping of the disclosure, the first means for measuring comprises a support or core, such as a metal sheath, the second means for measuring is removably integrable or attachable to the support or core, and the data generated by the first or the second means for measuring are processable by a processing means, for determining a third process or storage condition, such that the method further comprises the steps of integrating a data box for collecting the data of the first or the second means for measuring; and integrating a processing means for processing the data collected by the data box, thereby determining a third process or storage condition.

### Example

Reference is made to Figure 1. A liquor inside a tank comprising a reactor wall 1 and a mixture of nitirc, phosphoric, calcium nitrate and water was stored in a buffer tank by reacting phosphate rock with acid at a temperature ranging from 0 °C to 70 °C and a pressure ranging from 1 atmosphere to 10 bar. The temperature of the reaction in the process tank **2** was controlled through the use of a thermocouple **9** connected to the reactor wall **1** through the housing connection **7** and connected to a data acquisition box **11** through a cable **10.** The thermocouple **9** was protected through insertion inside a housing **6** connected to the outer wall housing **5** of the thermocouple **9.** The housing connection **7** was fastened to the outer wall housing **5** through a with a tight tift fastening means **8.**

While reaction in the process tank was ongoing, a vibration sensor **4** was attached to the outer wall housing **5** of the thermocouple **9** and connected through a cable **3** to a second data acquisition box **2.**

By attaching the vibration sensor **4,** the vibrations associated with the metal housing **5** of the thermocouple **9** that was embedded in the liquor. The vibrations acquired by the data acquisition box **2** were analysed by a computer software to determine the properties of the fluid in the reactor.

**Table 1. List of reference signs**

| | |
|---|---|
| **1** | reactor wall |
| **2** | vibration data acquisition box or vibration data collection box |
| **3** | cable connecting the vibration data acquisition box **2** to the vibration sensor **4** |
| **4** | vibration sensor |
| **5** | outer wall housing for the thermocouple **9** |
| **6** | protective housing **6** for the thermocouple **9** |
| **7** | housing connection for the thermocouple **9** |
| **8** | tight fit fastening means for fastening the housing connection **7** to the outer wall housing **5** |
| **9** | thermocouple |
| **10** | cable connecting the temperature data acquisition box **11** to housing connection **7** for the thermocouple **9** |
| **11** | temperature data acquisition box or temperature data collection box |

## Claims

1. A process or storage tank comprising:
• a liquid, slurry, gas or mixture thereof;
• a conduit in fluid communication with the tank or a conduit inside the tank; and
• a first means for measuring a first process or storage condition selected from the group consisting of temperature, pressure, pH, vibration, viscosity, water content, solid content, solid size, solid shape, solid roughness, and liquid level;
wherein the conduit or the means for measuring is configured for removably integrating a second means for measuring a second process or storage condition selected from the group consisting of temperature, pressure, vibration, pH, viscosity, water content, solid content, solid size, solid shape, solid roughness, and liquid level, while process or storage is proceeding inside the process or storage tank, and while the first means for measuring is inside the process or storage tank.

2. The process or storage tank according to claim 1, wherein the first means for measuring comprises a support or core, such as a metal sheath, and wherein the second means for measuring is removably integrable or attachable to the support or core.

3. The process or storage tank according to any one of claims 1 to 2, wherein the liquor is a nitrophosphate digestion liquor, a nitrophosphate crystal slurry, a nitrophosphate mother liquor, or a finished fertiliser liquor for evaporation or particulation.

4. The process or storage tank according to any one of claims 1 to 3, wherein the first process or storage condition is temperature, and wherein the second process or storage condition is pressure or liquid level.

5. The process or storage tank according to any one of claims 1 to 4, wherein the first means for measuring is a thermocouple or a resistive temperature probe, and wherein the second means for measuring is a piezoresistive or a pitot tube pressure probe.

6. The process or storage tank according to any one of claims 1 to 5, further comprising:
• a collection box for collecting the data of the first and/or the second means for measuring; and
• a processing means for processing the data collected by the collection box.

7. The process or storage tank according to claim 6, wherein the first process or storage condition is temperature, and wherein the second process or storage condition is vibration, and wherein the system further comprises:
• a data collection box for collecting vibration data; and
• a processing means for processing the vibration data such that the composition of the liquid, slurry, gas or mixture thereof, inside the process storage tank, is determined.

8. A method for measuring two process or storage conditions in a process or storage tank, comprising the steps of:
a) measuring a first process or storage condition with a first means for measuring in process or storage tank comprising:
• a liquid, slurry, gas or mixture thereof;
• a conduit in fluid communication with the tank or a conduit inside the tank; and
• the first means for measuring the first process or storage condition selected from the group consisting temperature, pressure, vibration, pH, viscosity, water content, solid content, solid size, solid shape, solid roughness, and liquid level;
wherein the method further comprises the steps of:
b) removably integrating, to the conduit or to the first means for measuring the second means, a second means for measuring a second process or storage condition selected from the group consisting of temperature, pressure, pH, vibration, viscosity, water content, solid content, solid size, solid shape, solid roughness, and liquid level; and
c) measuring the second process or storage condition with the second means for measuring.

9. The method according to claim 8, wherein the first means for measuring comprises a support or core, such as a metal sheath, and wherein step b) is performed by removably integrating or attaching the second means for measuring to the support or core.

10. The method according to any one of claims 8 to 9, wherein the liquor is a nitrophosphate digestion liquor, a nitrophosphate crystal slurry, a nitrophosphate mother liquor, or a finished fertiliser liquor to be submitted to evaporation or particulation.

11. The method according to any one of claims 8 to 10, wherein the method further comprises the steps of:
d) collecting data measured in step a) or step c) in a collection box; and
e) processing the data collected in step d) in a processing means, thereby determining a third process or storage condition.

12. The method according to any one of claims 8 to 11, wherein the first process or storage condition measured in step b) is temperature, and wherein:
• the second process or storage condition measured in step c) is pressure;
• the second process or storage condition measured in step c) is liquid level; or
• the second process or storage condition measured in step c) is vibration, and vibration data are collected in step d), and the vibration data collected in step d) are processed in step e), such that the composition of the liquid, slurry, gas or mixture thereof, inside the process storage tank, is determined.

13. The use of the process or storage tank according to any one of claims 1 to 7 for performing the method according to claims 8 to 12.

14. A method for revamping a process or storage tank comprising:
• a liquid, slurry, gas or mixture thereof;
• a conduit in fluid communication with the tank or a conduit inside the tank; and
• a means for measuring a process or storage condition;
into a process or storage tank according to any one of claims 1 to 7, wherein the method comprises the steps of:
• removing the means for measuring; and
• integrating a first means for measuring a first process or storage condition selected from the group consisting of temperature, pressure, pH, vibration, viscosity, water content, solid content, solid size, solid shape, solid roughness, and liquid level, and configured for removably integrating a second means for measuring a second process or storage condition selected from the group consisting of temperature, pressure, pH, vibration, viscosity, water content, solid content, solid size, solid shape, solid roughness, and liquid level, while process or storage is proceeding inside the process or storage tank, and while the first means for measuring is inside the process or storage tank.

15. the method according to claim 14, wherein the first means for measuring comprises a support or core, such as a metal sheath, and wherein the second means for measuring is removably integrable or attachable to the support or core, and wherein the data generated by the first or the second means for measuring are processable by a processing means, for determining a third process or storage condition, such that the method further comprises the steps of:
• integrating a data box for collecting the data of the first or the second means for measuring; and
• integrating a processing means for processing the data collected by the data box, thereby determining a third process or storage condition.
